# DEMANDE DE BREVET EUROPEEN

(11) **EP 2 851 240 A1**
(43) Date de publication de la demande: **25.03.2015**
(21) Numéro de dépôt: 14002759.0
(22) Date de dépôt: 06.08.2014
(51) Int. Cl.: B60P 1/43, A61G 3/06

(54) **Système à rampe double manuelle et automatique pour usager en fauteuil roulant dans un moyen de transport**

(30) Priorité: 06.08.2013 FR 1301888
(71) Demandeur: Metalic, S. à r.l., 69007 Lyon (FR)
(72) Inventeur: Salvat, Laurent, F-69007 Lyon (FR)
(74) Mandataire: Schmitt, John

(57) **Abrégé**

La présente invention concerne un système à rampe double manuelle et automatique pour usage en fauteuil roulant dans un moyen de transport, les rampes manuelle et automatique étant utilisées sélectivement.

Le système comprenant une rampe manuelle avec une palette manuelle (4) est caractérisé en ce qu'il intègre une rampe automatique comportant une palette automatique (8) déployée d'une position de repos dans laquelle la palette automatique (8) se trouve en dessous de la rampe manuelle vers une position de travail similaire à celle que prend la palette manuelle (4) en position de travail, les palettes manuelle (4) ou automatique (8) pouvant être sélectivement déployées en position de travail.

## Description

### Etat de la technique :

Le transport des personnes à mobilité réduite et plus particulièrement des personnes en fauteuil roulant est une des missions de service public confiées aux réseaux de transport en commun.

Afin de pouvoir s'acquitter de cette mission, les moyens de transport urbain de personnes doivent être adaptés pour l'accès à bord et l'accueil de tous les types d'usagers. Cela nécessite, dans le cas des usagers en fauteuil roulant dénommés UFR, l'installation d'un dispositif pour créer un plan incliné en pente douce entre le trottoir et le plancher du moyen de transport. Ce dispositif est couramment appelé rampe d'accès pour UFR.

Il existe à l'heure actuelle deux principales familles de rampe d'accès pour UFR :
- Des rampes dites « à cassette ». Pour celles-ci on découpe le plancher du bus et on décale le châssis vers le bas à l'endroit d'une porte afin de poser la rampe sur le châssis. Le dessus de la rampe est alors porteur. L'emplacement réservé pour la rampe est dimensionné de telle manière que le dessus de la cassette soit de niveau avec le plancher existant.
- Des rampes dites « sous-châssis ». Leur installation ne nécessite pas de modifications lourdes du châssis du moyen de transport puisqu'elles viennent s'accrocher en dessous de celui-ci au niveau d'une porte.

Ces différentes familles de rampes ont deux modes d'actionnement possible :
- Soit manuel. Un usager ou plus couramment le conducteur du bus doit alors sortir la rampe de son logement pour permettre l'accès de l'usager en fauteuil roulant puis la ranger une fois l'usager en fauteuil roulant passé.
- Soit automatique. Le chauffeur commande depuis son poste de conduite les mouvements de la rampe qui est actionnée par différents moyens (moteurs, vérins...).

Ces deux modes d'actionnement présentent chacun des avantages et des inconvénients qui font que le choix d'un type de rampe est un élément important de la définition des accessoires d'un moyen de transport en commun.

Le choix de la famille de rampe (à cassette ou sous-châssis) est typiquement imposé par le constructeur du moyen de transport. Les caractéristiques techniques et la géométrie du châssis ne laissent souvent pas le choix de la solution.

La solution retenue, à cassette ou sous-châssis, n'est pas l'élément clé pour l'utilisateur final de la rampe. C'est surtout le mode d'actionnement de la rampe qui a une grande importance pour le réseau. En effet, les deux modes d'actionnement ont chacun des avantages et des inconvénients forts.

La rampe manuelle est typiquement constituée d'un panneau fixe solidaire du châssis et d'un panneau mobile articulé autour d'une charnière qui se trouve au niveau du seuil de la porte. Au repos, le panneau mobile est superposé au panneau fixe. On fait pivoter le panneau mobile autour de l'axe de la charnière pour faire reposer son extrémité avant sur le trottoir et créer ainsi le plan incliné nécessaire au passage du fauteuil roulant.

Cette architecture simple, comportant peu de pièces, fait que le système est particulièrement fiable et robuste. Il n'y a pas d'organe mécanique, il ne nécessite donc pas d'entretien particulier. Il n'y a pas de composant qui du fait d'une défaillance pourrait rendre le système inopérant. Le taux de disponibilité est de 100%.

Malgré ces nombreux avantages, le fait que le conducteur soit obligé de quitter son poste de conduite pour manipuler une rampe manuelle est rédhibitoire pour la plupart des réseaux. En effet les risques d'incivilité pour le chauffeur, sa caisse à monnaie ou le moyen de transport, sont décuplés lorsque celui-ci n'est plus présent au poste de conduite. Cela pousse la plupart des réseaux à interdire aux chauffeurs de quitter leur poste de conduite durant leur service sauf cas de force majeure.

Dans ce cas, il n'y pas d'autre alternative que d'équiper les moyens de transport de rampes automatiques qui se commandent depuis le poste de conduite. Pour des raisons de sécurité, les rampes automatiques ne peuvent pas être conçues sur le même principe de panneau sur charnière que les rampes manuelles. Les mouvements automatiques d'un tel panneau, décrivant une rotation de plus de 180°, présenteraient des risques importants de blessure pour les personnes à proximité.

C'est pourquoi les rampes automatiques sont conçues sur un principe de coulissement. La partie mobile, appelée palette, translate pour sortir de son logement dont la partie supérieure est fixe. Puis sa partie avant s'abaisse jusqu'à reposer sur le trottoir.

Une fois dans cette position, deux solutions existent alors pour combler le jeu vertical entre le dessus de la palette et le plancher du bus. Soit un volet basculant crée un petit plan incliné entre le plancher et la palette, soit un système mécanique fait remonter l'arrière de la palette au niveau du plancher.

Les rampes automatiques intègrent une multitude de fonctions et de composants pour les réaliser, par exemple moteur, entraînement, guidage, capteurs, sécurités, etc. Les conditions difficiles auxquelles sont soumis en permanence ces matériels, notamment par projection de boue, d'hydrocarbures, de choc avec des éléments de voirie, du faible taux d'utilisation, du manque d'entretien préventif etc..., entraînent un fort risque de dégradations.

Il résulte de la conjugaison des deux contraintes qui sont la complexité et les conditions difficiles un taux de panne important et un taux de disponibilité faible pour les rampes automatiques.

Cet état de fait n'est pas acceptable pour les pouvoirs publics qui imposent désormais aux réseaux de transport urbains des taux de disponibilité des moyens d'accès pour les usagers en fauteuil roulant qui tendent vers les 100%.

Une solution pourrait être de faire en sorte qu'une rampe automatique puisse aisément être actionnée manuellement en cas de défaillance, la force humaine se substituant à l'entraînement mécanique. Cette solution ne permet pas de garantir un taux de disponibilité suffisant. Il y a en effet des modes de défaillance fréquents dus notamment à l'encrassement ou à la déformation suite à un choc des moyens de guidage ou d'entraînement, qui rendent tout mouvement de la palette impossible même manuellement.

Une autre solution serait d'équiper les moyens de transport d'une rampe manuelle sur une porte et d'une automatique sur une autre. La rampe manuelle serait utilisée en secours en cas de défaillance du modèle automatique. Ceci représente une solution coûteuse.

Les moyens de transport sont conçus pour recevoir une seule rampe sur la porte la plus proche de l'emplacement pour usagers à fauteuil roulant. Une modification au niveau d'une 2eme porte pour installer une seconde rampe pourrait s'envisager mais les couloirs standards ne sont pas adaptés au passage d'un usager à fauteuil roulant jusqu'à son emplacement. Cette solution présente donc de nombreux défauts du point de vue des constructeurs de moyens de transport qui ne peuvent pas installer plusieurs rampes dans un moyen de transport sans de lourdes modifications.

Afin de satisfaire aux impératifs des différents acteurs, le problème à la base de la présente invention est de concevoir un système de rampe d'accès pour usagers à fauteuil roulant dans un moyen de transport qui puisse présenter les avantages d'une rampe manuelle et d'une rampe automatique.

A cet effet, on prévoit selon l'invention un système de rampe d'accès pour un usager en fauteuil roulant dans un moyen de transport, ce système présentant une rampe manuelle comportant une palette manuelle pouvant être déployée d'une position de repos dans laquelle elle est intégrée dans le plancher du moyen de transport vers une position de travail où la palette s'étend de manière inclinée en présentant une première extrémité au niveau du plancher du moyen de transport tandis que son extrémité opposée repose sur le trottoir ou la chaussée, la palette manuelle formant alors un chemin de roulement pour la montée ou la descente d'un fauteuil roulant dans le ou du moyen de transport, caractérisé en ce qu'il intègre une rampe automatique comportant une palette automatique déployée d'une position de repos dans laquelle la palette automatique se trouve en dessous de la rampe manuelle vers une position de travail similaire à celle que prend la palette manuelle en position de travail, les palettes manuelle ou automatique pouvant être sélectivement déployées en position de travail.

L'effet technique de la présente invention est d'apporter une solution qui convienne à tous les acteurs et leurs contraintes respectives, ceci en prévoyant un système de rampe double composé d'une rampe manuelle superposée à une rampe automatique. Ce système est suffisamment compact pour s'intégrer dans les emplacements de rampes standards déjà prévus dans les planchers de moyens de transport.

Avantageusement, la rampe manuelle comprend un panneau fixe à une extrémité duquel la palette manuelle est articulée autour d'un premier axe d'articulation fixe dans le châssis de manière à passer d'une position de repos dans laquelle la palette manuelle est superposée au panneau fixe à une position de travail déployée dans laquelle la palette manuelle a pivoté de plus de 180° autour du premier axe d'articulation par rapport au panneau fixe.

Avantageusement, entre le panneau fixe et la palette manuelle, il est intercalé des éléments de liaison, une première extrémité de chaque élément de liaison étant articulée autour du premier axe d'articulation avec le panneau fixe et la seconde extrémité de chaque élément de liaison étant articulée autour d'un second axe d'articulation mobile avec la palette manuelle, le second axe d'articulation étant parallèle au premier axe d'articulation fixe, les éléments de liaison pivotant d'environ 90° en s'étendant verticalement dans la position de repos et sensiblement horizontalement dans la position de travail déployée de la palette manuelle.

Avantageusement, la rampe manuelle est équipée de moyen de préhension et/ou de moyen de détection de sa mise en position de repos ou en position de travail et/ou de moyen de verrouillage dans au moins une des deux positions.

Avantageusement, la rampe automatique comprend un chariot coulissant poussant la palette automatique de la rampe à l'extérieur du moyen de transport ainsi que des biellettes intercalées entre le chariot et la palette automatique, les biellettes étant articulées à une extrémité avec le chariot autour d'un premier axe d'articulation de rampe automatique solidaire du chariot et à l'autre extrémité avec la palette automatique autour d'un second axe d'articulation de rampe automatique s'étendant parallèlement au premier, le second axe d'articulation de rampe automatique étant mobile avec la palette automatique.

Avantageusement, chaque biellette porte un crochet muni d'une gorge ouverte de réception disposée vers l'extrémité de la biellette articulée avec le chariot, le crochet s'étendant dans la longueur de la biellette associée en lui étant solidaire et étant articulé autour du second axe d'articulation de rampe automatique solidaire de la palette automatique.

Avantageusement, chaque gorge ouverte de réception, sous l'action du chariot, est poussée contre un axe de butée fixe en l'entourant partiellement, la gorge et la biellette associée pivotant alors autour du premier axe d'articulation fixe par rapport au chariot tandis que la palette automatique pivote autour du second axe de rampe automatique par rapport à la biellette associée.

Quand la palette manuelle est articulée autour d'un premier axe d'articulation fixe dans le châssis, l'axe de butée fixe est confondu avec le premier axe d'articulation fixe de la palette manuelle.

Avantageusement, le chariot comporte des moyens d'entraînement et de guidage pour pousser la palette automatique d'une position de repos à une position de travail déployée.

Avantageusement, le système comprend un châssis encastrant en son intérieur les rampes manuelle et automatique en position de repos.

Avantageusement, le châssis comprend une branche verticale étant destinée à former la partie la plus interne du châssis dans le moyen de transport et la branche horizontale formant la base du châssis dans le moyen de transport sur laquelle sont montées les rampes manuelle et automatique.

Avantageusement, en position de repos de la rampe manuelle, l'extrémité dite opposée de la palette manuelle destinée à reposer sur le trottoir ou la chaussée dans sa position de déploiement, est en vis-à-vis de la branche verticale du châssis, les surfaces en regard de la palette manuelle et de la branche verticale comprenant des formes complémentaires laissant un espace entre elles juste suffisant pour que ces surfaces ne frottent pas l'une contre l'autre.

Avantageusement, en position de déploiement de la rampe manuelle, la surface en regard portée par la branche verticale du châssis est biseautée en formant une pente en prolongement de la palette manuelle déployée pour le passage du fauteuil.

L'invention concerne un moyen de transport caractérisé en ce qu'il comprend un tel système de rampe d'accès.

Avantageusement, le système de rampe d'accès est encastré dans un logement prévu dans le plancher du moyen de transport, la face supérieure du système étant dans le prolongement du plancher du moyen de transport en position de repos.

D'autres caractéristiques, buts et avantages de la présente invention apparaîtront à la lecture de la description détaillée qui va suivre et au regard des dessins annexés donnés à titre d'exemples non limitatifs et sur lesquels :

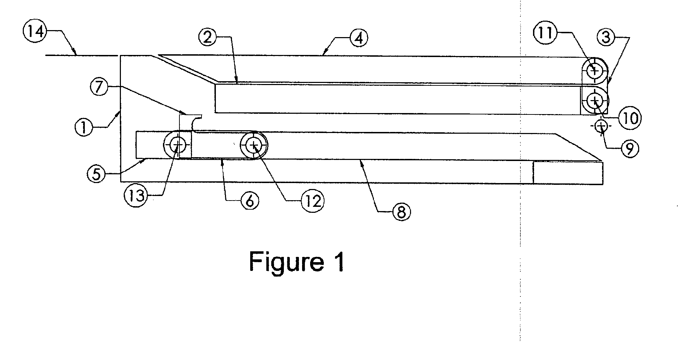

- la figure 1 est une représentation schématique d'une vue latérale d'un système de rampe double pour accès d'un usager en fauteuil roulant dans un moyen de transport, ce système selon la présente invention comprenant une rampe manuelle et une rampe automatique et étant montré dans sa position de repos,

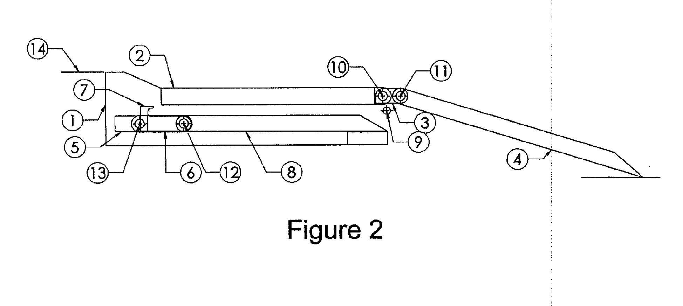

- la figure 2 est une représentation schématique d'une vue latérale d'un système de rampe double pour accès d'un usager en fauteuil roulant dans un moyen de transport, ce système selon la présente invention comprenant une rampe manuelle et une rampe automatique et étant montré dans sa position de déploiement de sa rampe manuelle,

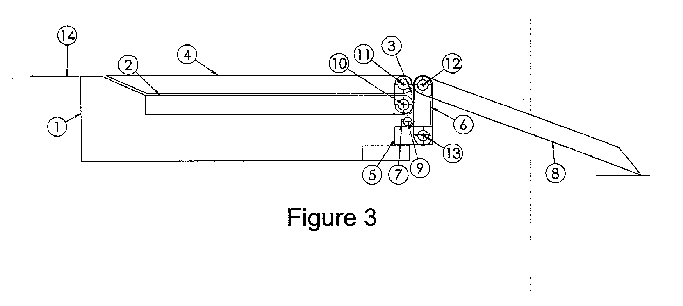

- la figure 3 est une représentation schématique d'une vue latérale d'un système de rampe double pour accès d'un usager en fauteuil roulant dans un moyen de transport, ce système selon la présente invention comprenant une rampe manuelle et une rampe automatique et étant montré dans sa position de déploiement de sa rampe automatique.

En se référant aux figures 1 et 3, le système de rampe double pour accès d'un usager en fauteuil roulant dans un moyen de transport selon la présente invention comprend un châssis 1 qui se fixe à l'intérieur du plancher du moyen de transport, ce moyen de transport pouvant être avantageusement mais non limitativement un moyen de transport routier, notamment un bus ou un car.

Le système de rampe double selon la présente invention intègre à la fois les fonctions de rampe manuelle et de rampe automatique, comme il va être détaillé ci-après. Les rampes manuelle et automatique sont sélectivement mises en position de travail déployée selon le choix du personnel habilité, à savoir le plus fréquemment le conducteur du moyen de transport.

Le système comprend une première palette 4, ci-après dénommée palette manuelle, qui peut être déployée manuellement. Il comprend aussi une seconde palette 8, ci-après dénommée palette automatique, qui peut être déployée automatiquement. Chaque palette 4, 8 se présente comme une surface plane qui peut être inclinée en position déployée entre le trottoir ou la chaussée d'une part et le plancher du moyen de transport d'autre part.

C'est sur cette première palette manuelle 4 ou seconde palette automatique 8 que peut rouler le fauteuil roulant de l'usager, cette palette manuelle 4 ou automatique 8 étant alors sélectivement mise en position déployée.

Dans cette position déployée, la palette manuelle 4 ou automatique 8 est disposée de manière inclinée en reliant le trottoir ou la chaussée sur lequel elle repose alors à une extrémité, l'autre de ses extrémités étant au niveau du plancher du moyen de transport. Les deux positions de déploiement de la palette manuelle 4 ou automatique 8 sont respectivement montrées aux figures 2 et 3.

En position de repos, c'est-à-dire de non déploiement des palettes 4 et 8, position qui est montrée à la figure 1, les palettes 4, 8 se logent en se superposant à l'intérieur du châssis 1, la palette manuelle 4 étant au-dessus de la palette automatique 8.

Le châssis 1 du système occupe un volume sensiblement parallélépipédique dans le moyen de transport. Ce châssis 1 peut comprendre une branche sensiblement horizontale et une branche sensiblement verticale. La branche verticale est destinée à former la partie la plus interne du châssis 1 dans le moyen de transport et la branche horizontale forme la base du châssis 1 sur laquelle sont montées les rampes manuelle et automatique.

Ce volume correspond, à un jeu fonctionnel près, à celui classiquement réservé dans un moyen de transport pour l'intégration d'une rampe d'accès standard pour usager à fauteuil roulant ou UFR. Ainsi le système selon la présente invention peut remplacer une rampe d'accès standard sans nécessiter d'adaptation spécifique.

Avantageusement, la rampe manuelle avec sa palette manuelle 4 est disposée au-dessus de la rampe automatique munie de sa palette automatique 8.

### Rampe manuelle

En se référant notamment aux figures 1 et 2, pour remplir la fonction de rampe manuelle, le système de double rampe selon la présente invention prévoit pour former la rampe manuelle d'associer à la palette manuelle 4 un premier panneau 2 fixe et rigide. Le premier panneau 2 fixe et rigide est solidarisé à un de ses bords longitudinaux au châssis 1 tandis que sur son autre bord longitudinal est articulée de manière pivotante la palette manuelle 4, ceci de manière directe ou indirecte, dans ce denier cas par des éléments de liaison 3.

Pour ce faire, dans le second cas, le bord longitudinal sur lequel est articulée la palette manuelle 4 comprend un premier axe d'articulation 10 parallèle à l'axe du moyen de transport autour duquel peuvent pivoter les éléments de liaison 3. Chaque élément de liaison 3 relie l'extrémité de la palette manuelle 4 autre que celle destinée à se poser sur le trottoir ou la chaussée au bord longitudinal du panneau 2 fixe. Le premier axe d'articulation 10 est fixe.

La géométrie des éléments de liaison 3 et de l'avant du panneau 2 est conçue de telle manière à limiter le débattement angulaire des éléments de liaison 3 par rapport au panneau 2 à 90°, ceci entre une position verticale et une position sensiblement horizontale, la position sensiblement horizontale étant montrée à la figure 1 tandis que la position verticale est montrée à la figure 2.

Les éléments de liaison 3 comportent un second axe d'articulation 11 autour duquel peut pivoter librement la palette manuelle 4. Dans la position de repos, montrée à la figure 1, les éléments de liaison 3 sont en position verticale et la palette manuelle 4 est rabattue horizontalement sur le panneau 2. Le second axe d'articulation 11 est avantageusement mobile lors du déploiement de la palette manuelle 4.

Dans la position de repos de la rampe manuelle montrée à la figure 1, l'extrémité opposée à celle raccordée au panneau 2 fixe et rigide de la palette manuelle 4 et destinée à reposer sur le trottoir ou la chaussée dans sa position de déploiement, est en vis-à-vis de la branche verticale du châssis 1. Cette extrémité est aussi dite extrémité avant de la palette manuelle 4. Les surfaces en regard de la palette manuelle 4 et de la branche verticale du châssis 1 comprennent avantageusement des formes complémentaires laissant un espace entre elles juste suffisant pour que ces surfaces ne frottent pas l'une contre l'autre.

La position déployée de la palette manuelle 4 est montrée à la figure 2. Cette position est atteinte en faisant pivoter la palette manuelle 4 autour du second axe d'articulation 11 et les éléments de liaison 3 autour du premier axe d'articulation 10. Les éléments de liaison 3 se bloquent alors en position horizontale.

Le pivotement de la palette 4 autour du second axe d'articulation 11 n'étant pas limité, ce pivotement continue jusqu'à ce que l'extrémité avant précédemment mentionnée de la palette manuelle 4 aille reposer sur le trottoir ou la chaussée, la palette manuelle 4 étant alors inclinée vers le bas.

Dans une variante de cette invention, les axes d'articulation 10 et 11 peuvent être confondus si l'on utilise une charnière piano simple comme articulation entre la palette manuelle 4 et le panneau 2 rigide et fixe, la charnière remplaçant aussi les éléments de liaison 3.

Quel que soit le type d'articulation utilisé, on crée ainsi un plan incliné en pente douce nécessaire au passage d'un usager à fauteuil roulant depuis le trottoir jusqu'à l'intérieur du moyen de transport et inversement. Le fauteuil de l'usager chemine alors sur la palette manuelle 4, puis sur le panneau 2 fixe qui est sensiblement horizontal pour finir sur la partie supérieure arrière du châssis 1 qui se trouve le plus à l'intérieur du moyen de transport et est à niveau du plancher de ce moyen de transport. Cette partie supérieure est avantageusement formée par la branche verticale du châssis 1 quand celui-ci comprend deux branches.

Afin de garantir un passage aisé pour les usagers à fauteuil roulant, l'extrémité avant de la palette manuelle 4 est de forme biseautée pointant vers le trottoir ou la chaussée de même que la partie supérieure arrière du châssis 1. Ces deux formes sont avantageusement complémentaires de manière à se correspondre lorsque la palette manuelle 4 repose sur le panneau 2 fixe en position de repos qui est la position non déployée.

Ceci vaut notamment et par exemple quand le châssis 1 comprend des branches verticale et horizontale comme précédemment décrit, les surfaces en regard de la palette manuelle 4 et de la branche verticale du châssis comprenant des formes complémentaires laissant un espace entre elles juste suffisant pour que ces surfaces ne frottent pas l'une contre l'autre

Pour garantir la sécurité des usagers et rendre les manipulations de la palette manuelle 4 plus ergonomique, différentes fonctions annexes peuvent être ajoutées à la palette manuelle 4.

Par exemple, un moyen de détection peut avertir une unité centrale de commande du moyen de transport pour bloquer les freins du moyen de transport tant que la palette manuelle 4 n'est pas dans sa position de repos.

Avantageusement, munir la palette manuelle 4 d'une poignée de préhension escamotée dans l'épaisseur de la palette manuelle 4 ou la munir d'un simple trou assurant le passage et l'action d'un élément de traction permet une prise en main aisée de la palette manuelle 4 et une manoeuvre sans effort excessif.

Un dispositif de verrouillage de la poignée et/ou de la palette manuelle 4 en position repos peut aussi être prévu afin d'interdire sa manipulation par des personnes non autorisées ou mal intentionnées.

### Rampe automatique

Comme précédemment mentionné, la fonction de rampe automatique est remplie essentiellement par la palette automatique 8.

La forme de la palette automatique 8 est sensiblement équivalente à la forme de la palette manuelle 4 avec son extrémité avant destinée à rencontrer le trottoir ou la chaussée dans sa position déployée de forme biseautée. Son extrémité arrière peut intégrer un second axe d'articulation 12 dit de rampe automatique, cet axe étant dit second axe en analogie avec le second axe d'articulation 10 de la palette manuelle 4.

Il peut être prévu à l'extrémité arrière de la palette automatique 8 un jeu de biellettes 6, les biellettes s'étendant parallèlement les unes aux autres et de manière espacée. Les biellettes 6 présentent une première extrémité articulée avec l'extrémité arrière de la palette automatique 8 autour du second axe d'articulation 12 de rampe automatique. L'autre extrémité des biellettes 6 est articulée autour d'un axe dit premier axe d'articulation 13 de rampe automatique s'étendant parallèlement au second axe 12 de rampe automatique.

Le second axe d'articulation 12 est mobile avec la palette automatique 8 tandis que le premier axe d'articulation 13 est mobile en étant solidaire d'un chariot 5 qui va maintenant être décrit.

Il est prévu pour les biellettes 6 un chariot 5 qui pousse les biellettes 6 vers l'extérieur du moyen de transport, ceci par coulissement sur la partie inférieure du châssis 1, avantageusement un coulissement horizontal par exemple, le cas échéant, sur la branche horizontale que comporte le châssis 1. Le chariot 5 entraîne alors le premier axe d'articulation 13 de rampe automatique. Le chariot 5 peut être mû en translation par un dispositif d'entraînement du type chaîne, courroie, vis sans fin, vérin ou autre.

En fin de translation du chariot 5, lorsque la palette automatique 8 est totalement sortie du châssis 1, sous l'effet de son poids, elle pivote autour du second axe d'articulation 12 de rampe automatique jusqu'à ce que son extrémité avant vienne reposer sur le trottoir ou la chaussée.

Dans une forme de réalisation de la présente invention, il est prévu de munir chaque biellette 6 d'un crochet 7 pivotant. Le crochet 7 est muni d'une gorge ouverte de réception disposée vers l'extrémité de la biellette 6 articulée avec le chariot 5. Le crochet 7 peut s'étendre dans la longueur de la biellette 6 associée en lui étant solidaire et en étant articulé autour du second axe d'articulation 12 de rampe automatique solidaire de la palette automatique 8.

Le mouvement horizontal du chariot 5 se poursuit jusqu'à ce que les crochets 7 viennent en contact avec un axe formant butée 9. La butée de la gorge de chaque crochet 7 contre un axe formant butée 9 en le recevant dans la gorge qui l'entoure alors partiellement induit un basculement des crochets 7 autour de cet axe 9 et fait se lever en position sensiblement verticale les biellettes 6.

Le second axe d'articulation 12 de rampe automatique à l'autre extrémité des biellettes que celle portant la gorge du crochet 7 est alors remonté et l'extrémité arrière de la palette automatique 8 qui est articulée autour de ce second axe d'articulation 12 de rampe automatique remonte aussi.

La palette automatique 8 est alors positionnée avec son extrémité avant reposant sur le trottoir ou la chaussée et son extrémité arrière au niveau de la partie supérieure du châssis 1 qui est alors réalisée au moins par la palette manuelle 4 en position de repos non déployée car non utilisée, cette palette manuelle 4 étant alors sensiblement horizontale.

Dans une variante de la présente invention, l'axe formant butée 9 de la palette automatique 8 et le premier axe d'articulation 10 de la palette manuelle 4 peuvent être confondus en étant alors les mêmes.

La position déployée finale de la palette automatique 8 montrée à la figure 3 est atteinte lorsque les biellettes 6 sont verticales et que l'extrémité arrière de la palette automatique 8 est au niveau du plancher du moyen de transport. La position correspondante du chariot 5 est avantageusement détectée par un capteur de fin de course.

Dans sa position déployée, la palette automatique 8 forme alors le plan incliné en pente douce nécessaire au passage d'un usager en fauteuil roulant depuis le trottoir ou la chaussée jusqu'à l'intérieur du moyen de transport. A la montée, le fauteuil de l'usager chemine sur la palette automatique 8, puis sur la palette manuelle 4 alors non déployée et formant une grande portion de la partie supérieure du châssis 1 et enfin sur la partie supérieure de l'arrière du châssis 1 qui est au niveau du plancher du moyen de transport.

La palette automatique 8 peut intégrer toutes les fonctions et sécurités obligatoires pour ce genre de matériel. Il peut être cité sans être limitatif un bord sensible sur l'extrémité avant de la palette automatique 8, un tapis sensible sur sa face supérieure faisant office de chemin de roulement pour le fauteuil de l'usager, une détection des surintensités du moteur déplaçant en translation le chariot 5, un capteur de position de repos avec la palette automatique 8 complètement rentrée dans le châssis 1 afin d'immobiliser le moyen de transport si la palette automatique 8 n'est pas dans cette position.

## Revendications

1. Système de rampe d'accès pour usager en fauteuil roulant dans un moyen de transport, ce système présentant une rampe manuelle comportant une palette manuelle (4) pouvant être déployée d'une position de repos dans laquelle elle est intégrée (4) dans le plancher (14) du moyen de transport vers une position de travail où la palette (4) s'étend de manière inclinée en présentant une première extrémité au niveau du plancher (14) du moyen de transport tandis que son extrémité opposée repose sur le trottoir ou la chaussée, la palette manuelle (4) formant alors un chemin de roulement pour la montée ou la descente d'un fauteuil roulant dans le ou du moyen de transport, **caractérisé en ce qu'**il intègre une rampe automatique comportant une palette automatique (8) déployée d'une position de repos dans laquelle la palette automatique (8) se trouve en dessous de la rampe manuelle vers une position de travail similaire à celle que prend la palette manuelle (4) en position de travail, les palettes manuelle (4) ou automatique (8) pouvant être sélectivement déployées en position de travail.

2. Système selon la revendication précédente, dans lequel la rampe manuelle comprend un panneau (2) fixe à une extrémité duquel la palette manuelle (4) est articulée autour d'un premier axe d'articulation (10) fixe dans le châssis (1) de manière à passer d'une position de repos dans laquelle la palette manuelle (4) est superposée au panneau (2) fixe à une position de travail déployée dans laquelle la palette manuelle (4) a pivoté de plus de 180° autour du premier axe d'articulation (10) par rapport au panneau (2) fixe.

3. Système selon la revendication précédente, dans lequel, entre le panneau (2) fixe et la palette manuelle (4), il est intercalé des éléments de liaison (3), une première extrémité de chaque élément de liaison (3) étant articulée autour du premier axe d'articulation (10) avec le panneau (2) fixe et la seconde extrémité de chaque élément de liaison (3) étant articulée autour d'un second axe d'articulation (12) mobile avec la palette manuelle (4), le second axe d'articulation (12) étant parallèle au premier axe d'articulation (10) fixe, les éléments de liaison (3) pivotant d'environ 90° en s'étendant verticalement dans la position de repos et sensiblement horizontalement dans la position de travail déployée de la palette manuelle (4).

4. Système selon l'une quelconque des deux revendications précédentes, dans lequel la rampe manuelle est équipée de moyen de préhension et/ou de moyen de détection de sa mise en position de repos ou en position de travail et/ou de moyen de verrouillage dans au moins une des deux positions.

5. Système selon l'une quelconque de revendications précédentes, dans lequel la rampe automatique comprend un chariot (5) coulissant poussant la palette automatique (8) de la rampe à l'extérieur du moyen de transport ainsi que des biellettes (6) intercalées entre le chariot (5) et la palette automatique (8), les biellettes (6) étant articulées à une extrémité avec le chariot (5) autour d'un premier axe d'articulation (13) pour rampe automatique solidaire du chariot et à l'autre extrémité avec la palette automatique (8) autour d'un second axe d'articulation (12) pour rampe automatique s'étendant parallèlement au premier, le second axe d'articulation (12) pour rampe automatique étant mobile avec la palette automatique (8).

6. Système selon la revendication précédente, dans lequel chaque biellette (6) porte un crochet (7) muni d'une gorge ouverte de réception disposée vers l'extrémité de la biellette (6) articulée avec le chariot (5), le crochet (7) s'étendant dans la longueur de la biellette (6) associée en lui étant solidaire et étant articulé autour du second axe d'articulation (12) solidaire de la palette automatique (8).

7. Système selon la revendication précédente, dans lequel chaque gorge ouverte de réception, sous l'action du chariot (5), est poussée contre un axe de butée (9) fixe en l'entourant partiellement, la gorge et la biellette (6) associée pivotant alors autour du second axe d'articulation (12) de la palette automatique (8) fixe par rapport au chariot (5) tandis que la palette automatique (8) pivote autour du second axe (12) solidaire de la palette automatique (8) par rapport à la biellette (6) associée.

8. Système selon la revendication précédente, dans lequel, quand la palette manuelle (4) est articulée autour d'un premier axe d'articulation (10) fixe dans le châssis (1), l'axe de butée fixe (9) est confondu avec le premier axe d'articulation (10) fixe de la palette manuelle (4).

9. Système selon l'une quelconque des quatre revendications précédentes, dans lequel le chariot (5) comporte des moyens d'entraînement et de guidage pour pousser la palette automatique (8) d'une position de repos à une position de travail déployée.

10. Système selon l'une quelconque des revendications précédentes, lequel comprend un châssis (1) encastrant en son intérieur les rampes manuelle et automatique en position de repos.

11. Système selon la revendication précédente, dans lequel le châssis (1) comprend une branche sensiblement horizontale et une branche sensiblement verticale, la branche verticale étant destinée à former la partie la plus interne du châssis (1) dans le moyen de transport et la branche horizontale formant la base du châssis (1) sur laquelle sont montées les rampes manuelle et automatique.

12. Système selon la revendication précédente, dans lequel en position de repos de la rampe manuelle, l'extrémité dite opposée de la palette manuelle (4) destinée à reposer sur le trottoir ou la chaussée dans sa position de déploiement est en vis-à-vis de la branche verticale du châssis (1), les surfaces en regard de la palette manuelle (4) et de la branche verticale comprenant des formes complémentaires laissant un espace entre elles juste suffisant pour que ces surfaces ne frottent pas l'une contre l'autre.

13. Système selon la revendication précédente, dans lequel en position de déploiement de la rampe manuelle, la surface en regard portée par la branche verticale du châssis (1) est biseautée en formant une pente en prolongement de la palette manuelle (4) déployée pour le passage du fauteuil.

14. Moyen de transport **caractérisé en ce qu'**il comprend un système de rampe d'accès selon l'une quelconque des revendications précédentes.

15. Moyen de transport selon la revendication précédente, pour lequel le système de rampe d'accès est encastré dans un logement prévu dans le plancher (14) du moyen de transport, la face supérieure du système étant dans le prolongement du plancher (14) du moyen de transport en position de repos.
